# EUROPEAN PATENT SPECIFICATION

(11) **EP 3 900 862 B1**
(45) Date of publication and mention of the grant of the patent: **21.08.2024**
(21) Application number: 20170718.9
(22) Date of filing: 21.04.2020
(51) Int. Cl.: B23K 9/00

(54) **WELDING DEVICE**
SCHWEISSVORRICHTUNG
DISPOSITIF DE SOUDURE

(43) Date of publication of application: 27.10.2021
(73) Proprietor: DCN Diving B.V., 4612 PL Bergen op Zoom (NL)
(72) Inventor: Toups, Earl Lee, Dunmow, Essex 4612 PL (GB)
(74) Representative: Arnold & Siedsma

(56) References cited:
- WO-A1-94/06603
- CN-U- 206 869 339
- JP-A- S5 073 844
- US-A1- 2004 020 902

## Description

This disclosure relates to a device for underwater dry-welding of an area of an underwater structure arranged in a water mass. The disclosure also relates to the use of this device and to a method of underwater dry welding.

Underwater structures positioned in a water mass, such as a sea, a lake or a river, typically are comprised of various structural sections, often made of tubular steel members or parts thereof that have been welded to each other in dry condition on land and have then been transported to a water mass. For instance, oil platforms are typically constructed for a large part on land and subsequently towed to a position at sea. The platforms may be anchored onto the seabed on steel legs comprising numerous welds. These welds are located in the water and need to be inspected from time to time to determine their quality. When the quality of the welds deteriorates, for instance because cracks are developing, the welds need to be repaired. Inspection, maintenance and repair of these underwater welds may be a difficult and sometimes dangerous task because of the harsh environmental conditions, especially at sea.

One option would be to send divers to the underwater positions of the welds and have them perform underwater welding in a wet environment. However, welding in a wet environment has a number of disadvantages. First of all, assuring the integrity of underwater welds is difficult because defects in the welds are difficult to detect in subsea conditions, especially at greater depths or when the defects are beneath the surface of the weld. Secondly, the opportunities for subsea wet welding are sometimes limited. For instance, the welding process is limited to low carbon equivalent steels, especially at greater depths, because of the possibility of hydrogen-induced cold cracking (HIC), herein also referred to as hydro cracking. Hydro cracking deteriorates the quality of the weld. Thirdly, the presence of water also provides for a rapid cooling of the welding area. If the cooling is too fast, this may have a detrimental effect on the quality of the weld as well. Fourthly, it is easier to comply with standard welding quality codes. These quality codes may have been determined in the design phase of the structure and are defined assuming dry welding conditions. In use of the underwater structure it is preferred to have each of the repaired welds to meet its original (dry) welding quality code. It would therefore be beneficial to repair the welds using a dry welding technique. The above-mentioned standard welding quality codes may have been set by a quality standardization organization like the DNV GL (Det Norske Veritas and Germanischer Lloyd) group. Finally, subsea wet welding may be a dangerous process, especially dangerous to the health of the divers involved. For instance, divers typically use around 300-400 Amps of direct current to power their waterproof welding electrode. There is a risk of electric shock due to malfunctioning welding equipment. Furthermore the combination of hydrogen and oxygen produced during the welding process can result in the formation of gas pockets. If ignited, these gas pockets can lead to lethal explosions which may become fatal to the diver.

Another known option to accomplish underwater welds is to place a specially constructed vessel or habitat including a positive pressure chamber against the area of the underwater construction to be welded. The area to be welded may be dried, protected from the water by the presence of the vessel against the structure. The diver inside the positive pressure chamber is in a dry environment as well and now can apply a dry welding process to area, for instance a hyperbaric weld. Hyperbaric welding may provide an improved control over the welding process conditions and tends to render superior quality welds relative to wet welds.

The above-mentioned vessel can be removably attached to the underwater structure and provides a confined space underwater in which the gas pressure is slightly higher than the water pressure outside. Because of the difference in pressure the pressure chamber will stay dry and personnel and material can be locked into the chamber. As mentioned above, an advantage of this type of vessel is that the divers may inspect the underwater structure, clean the area to be repaired and perform the actual welding process all in dry conditions. An example of this type of vessel especially designed for welding at relatively small depths, for instance for repairs of sheet-pile walls in a shallow water mass, is disclosed in patent document NL 2 009 068 C. Other types of vessels for accommodating one or more divers, some of them being designed for larger depths, are known as well. However, there also several disadvantages associated with this kind of vessels. Because the pressure chamber of the vessel needs to be large enough to accommodate one or more divers, the vessel tends to become heavy, large in size and costly. The high weight of the vessel is also necessary to compensate the positive buoyancy of the pressure chamber underwater. Its large size contributes to the high weight of the vessel. Due to harsh conditions at sea (swell, wind), especially in the winter period, it is in practice often not possible to use this kind of vessel without running the risk of damaging the underwater structure or putting the divers in danger. Furthermore, because of the large size of the vessel it may be difficult to properly position the vessel relative to the weld to be treated. Some welds may even not be accessible at all from the vessel and need to be repaired by employing a wet welding process instead. A further disadvantage of the known welding vessel is the time needed to deploy the vessel. It typically requires several days to deploy the vessel, i.e. to transport a vessel from the surface of the water mass to the area to be welded and to properly attach the vessel to the underwater structure and get a seal.

Document JPS5073844A relates to a so-called local dry type used for welding while locally excluding water from a welding point when performing welding of a hull or an offshore structure underwater. The document is further related to underwater welding equipment.

In view of the above and for other reasons there is a need for a welding solution wherein one or more of the above-identified drawbacks have been removed, fully or partially. There is also a need to provide a method and device for dry-welding an area of an underwater structure arranged in a water mass that may result in high quality welds, also in places that not accessible or less so using existing vessels, against relatively low manufacturing and operating costs, and/or with a short deployment time.

According to a first aspect a device as claimed in appended claim 1 is provided.

The device is suited for monitoring and repairing existing welds and/or deficiencies and structural defects like cracks in the underwater structure, irrespective of whether or not a previous weld existed. Once the housing has been attached to the underwater structure, gas (for instance, air, N₂, Argon...) is supplied to the welding chamber through the gas supply. The supply of gas to the housing forces water in the welding chamber to be discharged from the water exhaust. The replacement of the water by gas causes a gas pocket or gas bubble inside the welding chamber. The supply of gas is continued until the gas pocket inside the welding chamber is large enough and hence the water level inside the welding chamber is sufficiently reduced, preferably reduced to a level beneath the level of the manipulation elements. Furthermore, the water exhaust may also discharge gas when the bottom of the welding chamber has been reached.

The device further comprises a gas exhaust. The gas exhaust is in connection with the interior of the welding chamber and can discharge *inter alia* the gas that has been supplied by the gas supply after the desired reduced water level inside the welding chamber has been reached. The gas exhaust can also discharge any other gas like smoke or fumes resulting from the welding process.

In embodiments of the disclosure the device is provided with a gas-curtain unit that provides a so-called gas curtain along the transparent window. The gas-curtain unit may continuously flush the internal atmosphere of the welding chamber preventing a possibly dangerous build-up of fumes and smoke and keeping an optimal visibility for the diver. The gas exhaust is also able to discharge this gas that is continuously supplied to the welding chamber, by the gas-curtain unit, even if the desired reduced water height in the welding chamber has been reached. The gas exhaust may furthermore provide pressure equalization between inside and outside, especially at greater depths, and will reduce the likelihood of creating an overpressure inside the welding chamber.

The above-described device has several advantages over existing vessel-type of devices. For instance, a diver/welder is able to manipulate all working tools from outside the housing and does not need to get into and out the welding chamber where the actual welding process takes place. Some health issues or other hazards associated with welding in a confined space are avoided and the device according to the present disclosure may offer a manner of working that is potentially safer to the diver/welder.

The wet environment wherein the working tools are situated when the device is lowered into the water mass and attached to the underwater structure can be made into a dry environment by creating the gas pocket in the welding chamber, thereby allowing the inspection, maintenance and repair operations to be accomplished under optimal dry conditions. All working tools like the welding torch or other tools like a grinder, brush, high-pressure water jet lance, etc. needed for inspection, maintenance and repair of existing welds and/or of deficiencies like cracks in the underwater structure by applying a new weld, may be used in their preferred dry environment. Nevertheless, in embodiments of the present disclosure, the working tools are configured to be waterproof so that it is not necessary to be able to store them in storage locks when the welding chamber is filled with water (before and after the welding process).

Another advantage is that because the diver/welder does not need to be positioned inside the housing, the size and weight of the housing can be kept to a minimum. Typically a housing with a height between 1 m and 2 m, a width between 1 m and 2 m and a depth between 0.5 and 1.5 m and an overall weight of circa 1 metric ton would be sufficient to provide appropriate space and room to manoeuvre for respectively the tools and the diver/welder to perform all the required tasks.

The device should be constructed to be able to withstand the pressures at the depth it is intended for. This depth ranges from 1 to 250 msw (meters of sea water).

The manipulation elements can be arranged in any of the walls of the housing or in the transparent window. More specifically, the manipulation elements may be attached to the transparent window and may be extending into the welding chamber. In this manner the diver/welder has an optimal view on the underwater structure, on the working tools and on the manipulation elements.

In principle it is possible to work with one single manipulation element. However, it may be beneficial to the diver/welder to be able to work at different positions on the underwater structure and/or to work with two or more individually controllable manipulation elements. Therefore, in accordance with further embodiments of the present disclosure, the device comprises two or more manipulation elements attached to the transparent window and/or any of the walls of the housing at different positions next to each other.

The manipulation element may be a glove configured to receive a hand or arm of a diver. The glove is arranged to extend from a wall of the housing and/or the transparent window into the welding space and allows the diver/welder to handle and operate all working tools inside the welding chamber while keeping the dry condition inside the welding chamber intact. The glove may be similar to a so-called dry box glove. In embodiments of the present disclosure the glove may be of a one-piece or a multi-piece design. The required flexibility of the glove may be provided by the material it is made of and/or may be provided in another way, for instance by embodying the glove with articulate portions. The material of the glove and its connection to the window or wall should be watertight in order to prevent water from entering the welding chamber. Yet the material should be sufficiently flexible to allow for an adequate feel and manual dexterity, not impeding the welding process.

In further embodiments the glove comprises an outer protective flame and heat resistant material. This is to provide sufficient resistance to heat or sparks resulting from the welding process in the welding chamber.

As suggested above, although the use of one glove would in some situations be sufficient, in other embodiments two, three or more gloves are provided. One reason for providing multiple gloves is that the diver/welder(s) can use both his hands to handle a working tool inside the welding chamber and/or to manipulate two (or more) working tools at the same time. Another reason is that the diver/welder can reach the area to be inspected or repaired from more than one position. For instance, when the weld or crack is relatively long, the diver/welder should be able to operate on the entire weld/crack without having to displace the housing relative to the underwater structure. In a further embodiment the window is provided with three or more manipulation elements to provide the diver the possibility to use both hands at shifted positions.

The housing may comprise of an opening in the housing at the bottom of the welding chamber. This opening may bring the interior of the welding chamber in open communication with the water mass outside the housing. The opening may be part of an access lock or equipment lock configured to allow transfer of equipment and/or materials, for instance welding consumables, to the welding chamber. The transfer could be accomplished both in wet and in dry, dewatered conditions, as will be explained later.

The opening in the housing can be fitted with a lockable door. The door allows closing of the opening.

As mentioned above, the water level inside the welding chamber may be controlled by supplying gas into the welding chamber trough the gas supply. Gas supplied by the gas supply may increase the pressure inside the welding chamber and cause the water inside to press downwards and out of the welding chamber through the opening at the bottom of the housing until the water level reaches the working water level.

The working level of the water in the welding chamber is the level at which the air pocket is large enough to enable the diver to manipulate at least one working tool in dry conditions. There are several manners in which this working level of the water in the welding chamber can be determined. First of all, the working level can be controlled by a supervisor on a diving support vessel (DSV), or an offshore platform, or by the diver based on visual inspection (directly and/or through one or more cameras, the cameras being connected to a control station at the surface of the water mass) and/or based on sensors arranged inside the welding chamber. Alternatively, the welding chamber may be dewatered completely so that the working level extends at the bottom opening of the housing.

The gas exhaust can be realized in different embodiments. In embodiments the gas exhaust may be positioned at the top of the welding chamber is absent or in one of the side walls. The gas exhaust may comprise a conduit (pipe) connected to the upper part of the housing and having an inlet opening in connection with the interior of the welding chamber and an outlet opening at its free end positioned outside the housing. Gas supplied by the gas supply may increase the pressure inside the welding chamber and cause the water inside the welding to be pressed downwards and out of the welding chamber through the opening at the bottom of the housing until the water level reaches the desired height.

In embodiments of the present disclosure the conduit extends at least partially outside the housing and ends at a height position between the height position of the top of the housing and the bottom of the housing. The conduit may comprise a valve for opening or closing the passage through the conduit. The valve can be selectively opened or closed to regulate the gas pressure inside the welding chamber, as will be explained later.

The above-mentioned conduit may comprise a valve for opening or closing the passage through the conduit. In case the valve is closed the water level may be reduced even more, for instance to the level of the opening of the equipment lock/access. This valve may be of a type that can be remotely actuated by the supervisor in the DSV. Alternatively or additionally, the valve may be freely accessible from outside the housing and may be provided with an operating member such as a lever so that the valve may be manually operated by the diver/welder.

In embodiments of the present disclosure the device comprises a gas-curtain unit configured to generate a gas flow along the inner surface of the window. The gas-curtain may comprise a high-pressure ring-shaped conduit with multiple gas nozzles arranged inside the welding chamber along at least a part of the perimeter of the window. The gas-curtain is aimed to prevent fogging of the window or prevent the build-up of fumes or welding debris. The gas-curtain unit causes continuously flushing of the internal atmosphere inside the welding chamber to create optimal operating conditions for the welding process.

As defined herein the welding process could be any type of welding process that is suited for repairing cracks or similar structural defects and/or repairing existing welds. The working tools comprise dry welding equipment, for instance at least one of shielded metal arc welding (SMAW) equipment, gas metal arc welding (GMAW) equipment, gas tungsten arc welding (GTAW) equipment (i.e. Tungsten Inert Gas (TIG) welding equipment), flux-cored arc welding (FCAW) equipment and metal-cored arc welding (MCAW) equipment.

In order to provide a reliable sealing between the housing and the underwater structure the seal may comprise a flat seal and a D-shaped seal, optionally also an inflatable seal between the flat seal and D-shaped seal. These seals will provide a watertight connection of the housing to the underwater structure.

According to another aspect a method a claimed in appended claim 13 is provided.

### EXEMPLIFYING EMBODIMENTS

Further characteristics of the present disclosure will be elucidated in the accompanying description of various exemplifying embodiments thereof. In the description reference is made to the annexed figures.
Figure 1 is a schematic, partially cut-away side view of an embodiment of a device according to the present disclosure, attached to an underwater structure and further showing a diver trained to perform the welding process;
Figure 2 is a more detailed view of the embodiment of figure 1;
Figure 3 is a cross-sectional view of the embodiment of figures 1 and 2;
Figure 4 is a cross-sectional view of another embodiment of the device according to the present disclosure;
Figures 5A-5H show consecutive stages in the dewatering via the water exhaust and the internal pressure regulation via the gas exhaust.

Unless defined otherwise, all technical terms used herein have the same meaning as commonly understood by one of ordinary skill in the art to which this disclosure belongs. Still, certain elements are defined below for the sake of clarity and ease of reference. Furthermore it is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements or use of a "negative" limitation.

In embodiments of the present disclose an underwater dry space is provided by using a kind of micro-habitat isolating the structural deficiency or structural defect (e.g. fatigue crack). This makes it possible to perform a dry weld repair including weld preparations, pre-heating and non-destructive testing.

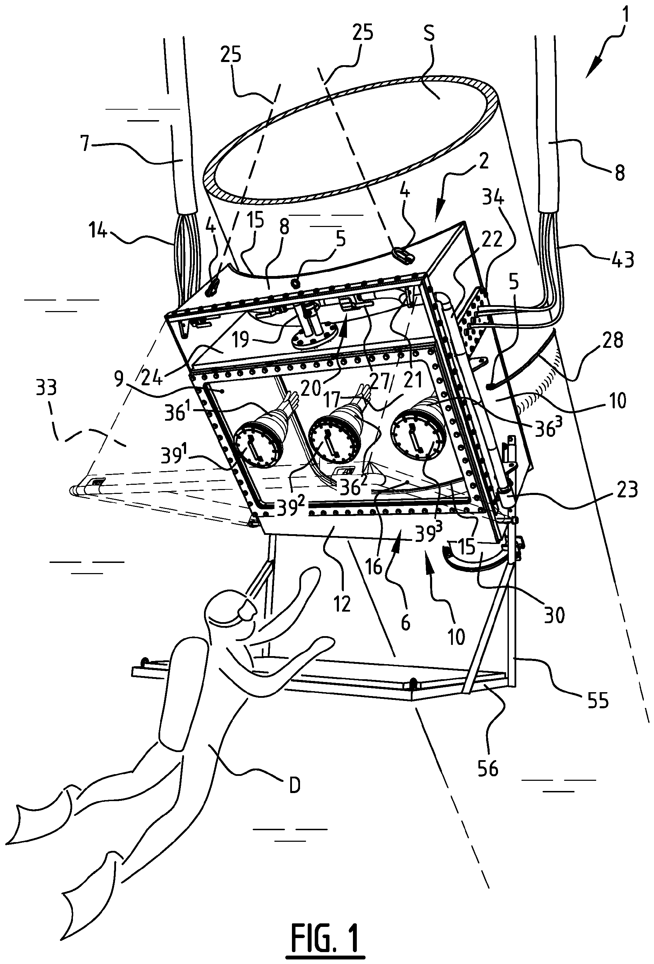

Referring to figure 1 a non-limiting embodiment of a device 1 for underwater dry-welding is shown. The device 1 is shown in a state wherein it already has been attached to an underwater structure (S). The underwater structure in this example is an offshore structure, more specifically a subsea structure, for instance the steel leg of an oil platform, and the mass of water is the sea. However, the present disclosure is also applicable to structures arranged inshore. Furthermore, the underwater structure (S) in the shown example takes a tubular shape. Tubular shapes are quite common in the field of subsea structures such as oil platforms and the like. However, it should be understood that the present disclosure is not restricted to such tubular shaped structures. In fact, the disclosed device and method are in principle suitable for any type and shape, albeit that the shape of one or more parts of the device might have to be adapted to any deviating shapes of the underwater structure in order to be able to attach the device in a sealing manner to the structure.

Although the figures show embodiments of the device in case the housing of the device is attached to more or less upright oriented underwater construction element, it is to be understood that the device is equally well suited for attachment to lying, for instance horizontal construction elements.

Figure 1 further shows a generally block-shaped steel housing 2 comprised of a support wall 3, two side walls 9 and 10, a bottom wall 11, and a front wall 12. Inside the housing 2 a welding chamber 6 is defined. The walls of the welding chamber 6 are the above-mentioned walls of the housing 2 except for the top wall 24 arranged slightly below the support wall 3.

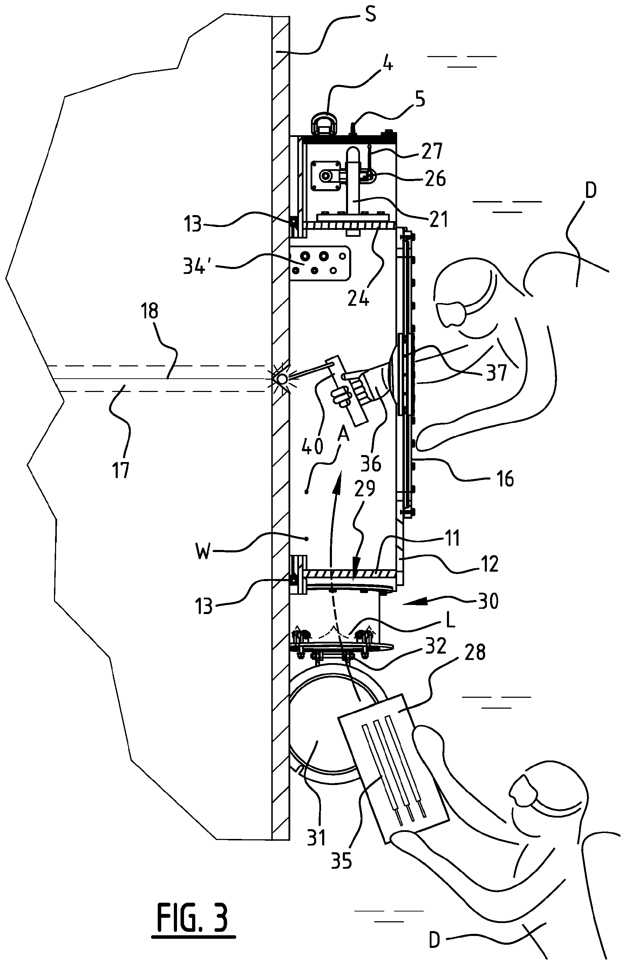

On top of the support wall 3 two lifting eyes 4 are provided to which respective hoisting or lifting cables 25 can be attached. The lifting eyes 4 and lifting cables 25 are used to lift the housing 2 overboard using a crane on the diving support vessel (DSV, not shown in the figures) or Offshore Platform (Platform, not shown in the figures) and to lower the housing 2 to the position of the area 17 of the underwater structure S to be treated (cf. figure 3). The housing 2, more specifically the support wall 3 and the side walls 9,10, is also provided with a number of attachment eyes 5 for connecting the housing 2 to the underwater structure S using preinstalled rigging (schematically shown in figure 1).

A diver platform 56 is connected to the housing 2 via a frame 55. The orientation of the diver platform 56 relative to the housing may be changed depending on the position wherein the housing is attached to the underwater structure S. In the position of the housing 2 shown in figure 1, the diver D may stand on the platform 56 while performing his task. In case the housing 2 in a horizontal position with the opening 17 facing upward, the platform 56 can be arranged below the front side of the housing so that the diver D can be supported in a lying position on the platform 56 while performing his task.

An optional awning 33 (denoted in dotted lines) can be connected to the housing 2 as well, for instance in case the housing 2 is placed in a lying position to treat an area 17 at the bottom side of a construction element. The awning 33 may protect the diver D from distracting environmental issues, such as water currents etc. In the event that the window becomes damaged and required to be replaced, the awning can be deployed and filled with gas displacing the water from inside and in front of the habitat window. This allows for the habitat window to be removed and replaced without the need to flood the habitat.

The back side of the housing 2 is essentially open (cf. opening 17). The edges 15 of the side walls 9,10 are shaped (in this example having a concave shape) to allow them to follow the contour of the (convex shaped outer surfaced of the) underwater structure S. The edges 15 are provided with a seal 13 arranged around the opening 17 in the housing 2 and configured to provide a watertight connection of the housing 2 to the underwater structure (S).

The front side of the housing comprises a front wall 12 and a transparent window 16, for instance a glass window arranged in the front wall 12 and configured to allow a diver D to see the interior of the welding chamber 6, including a number of working tools arranged therein. Since the back side of the housing 2 is open, the transparent window 16 also enables the diver D to directly see the underwater structure, including the area 17 to be welded and the existing weld 18 to be repaired (if present).

Between the diving support vessel (DSV) or offshore platform at the surface and the housing 2 of the underwater dry-welding device 1 an umbilical is present comprising a number of cables. The cables of the umbilical are configured to provide at least one of the following: a supply of gas (also called a blow down line) to the welding chamber 6 for dewatering the same, a supply of electrical power and/or hydraulic power to the tools inside the welding chamber 6 and to further tools, such as lights, actuators, etc. placed outside the welding chamber 6. The umbilical may also provide a cable configured to provide a high-pressure water jet, for instance for driving tools like an angle grinder and/or for cleaning purposes using a high-pressure water jet lance. In order to reduce the clutter of the connection in the area where the cables of the umbilical enter and exit the underwater device 1, the umbilical is split up in two umbilical parts 7, 8 (cf. figure 1) enabling the cables to enter and exit the housing 2 at two different positions. In the right-side wall 10 of the housing 2 a first penetrator plate 34 and in the left side wall 9 a second penetrator plate 34' is arranged.

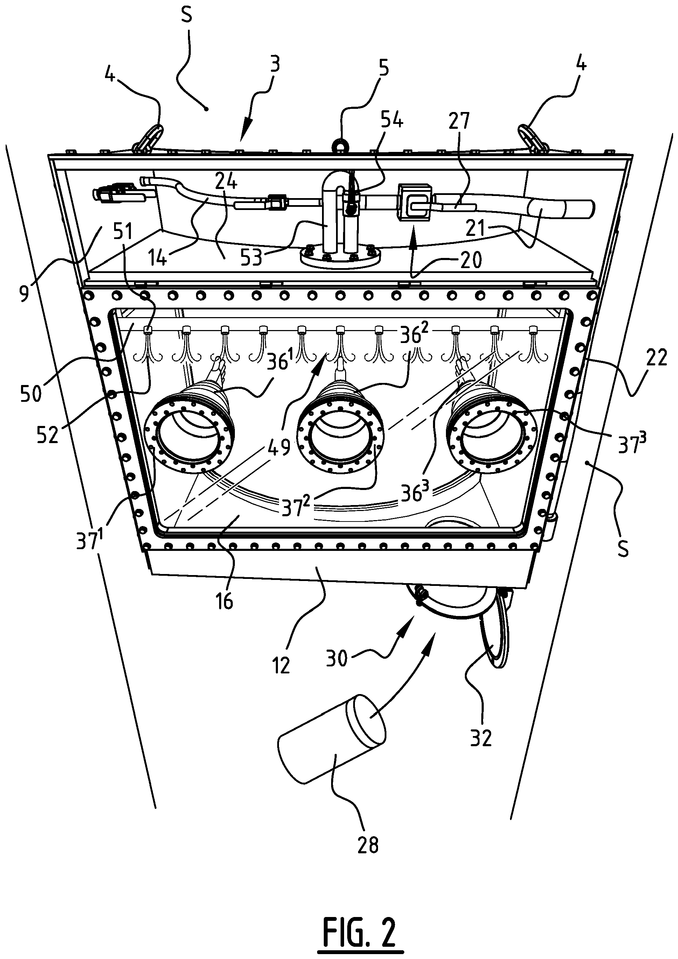

As is best shown in figure 2, the space between the support wall 3 of the housing 2, top wall 24 of the welding chamber 6, left sidewall 9 and right sidewall 10 is open at both its front and back side. In this space lines from the umbilical and/or equipment may be accommodated. Examples are a gas exhaust 20 for discharging gas from the interior of the welding chamber 6 via a conduit forming the internal gas exhaust part 21 (internal in the sense that it extends inside the housing 2) and the external gas exhaust part 22 (external in the sense that it extends outside the housing 2) with an outlet opening 23 at its free end and a Venturi supply line 38 arranged to provide a suction effect at the gas exhaust 20. Connected to at least one of the penetrator plates are gas inlet to a gas-curtain unit 49, an electrical power line (not explicitly shown in the figure), a telecommunications line, and any further line needed for the welding process arranged in a first umbilical part 7 and further lines, such as power lines in a second umbilical part 8.

In operation, once the housing 2 is connected to the underwater structure S using the rigging described above, the supervisor on the diving support vessel (DSV) or on the offshore platform opens the supply of pressurized gas in order to remove at least a part of the water present in the welding chamber 6. Gas flows through the gas supply line 14 in the umbilical part 7 and the gas supply 19 in the housing 2 towards the welding chamber 6 and creates a gas pressure high enough to urge a part of the water (or all the water) out of the welding chamber through the water discharge 29 formed by an opening in the bottom of the housing 2. The supplied gas may cause a partial of full dewatering of the welding chamber 6, depending on the water level after the supply of gas is stopped.

The dewatering creates a gas pocket (i.e. a gas pocket when pressurized gas is supplied to the welding chamber) inside the welding chamber. The desired level of water after the dewatering may depend on different factors. In some embodiments the supervisor determines the desired water level inside the welding chamber and stops the supply of gas to the welding chamber 6 once the desired water level inside the welding chamber has been reached. This water level is preferably low enough so that after the dewatering said at least one manipulation element is in the dry part of the welding chamber. The dewatering of the welding chamber may be a partial dewatering or a full dewatering. In case of a partial dewatering the water level inside the welding chamber after dewatering is somewhere between the top and the bottom of the housing, preferably below the position of the manipulation elements and the working tools, while in case of full dewatering the water level is at the bottom of the housing. In the latter case gas is supplied until the gas pressure inside the welding chamber is high enough for the gas to escape through an opening in the bottom side of the housing. In both cases a pressure reduction or even pressure equalization (with respect to the pressure at the outlet of the gas exhaust 20) can be performed after the dewatering. In the pressure reduction step the amount of water in the welding chamber and therefore the water level is kept constant while the gas pressure inside the welding chamber is reduced.

Referring to the figures, especially to figure 3, an access lock or equipment lock 30 is arranged at the bottom of the housing 2. The equipment lock 30 basically is formed by a short tubular element that can be closed by a pivotable door 31. The door 31 is connected to the tubular element using hinges 32 so that the equipment lock 30 can easily opened and closed. The bottom of the equipment lock 30 comprises an opening through which water may be discharged from the welding chamber or containers 28 with equipment and/or materials, for instance welding consumables such as fresh welding torches 35, may arranged into the welding chamber 6 by the diver. The equipment and/or materials are usually arranged in a protective, watertight container 28 (dry pot) that may be manually placed by the diver D inside the gas pocket created inside the welding chamber 6. Once the container 28 is placed inside the gas pocket of the welding chamber 6, the container may be opened, and its contents may be used (in dry condition) in the welding process. In further embodiments the welding chamber 6 comprises one or more watertight locks that may be used to store consumables, each lock comprising a door configured to be opened when the locks are in a dry environment (to keep consumables dry).

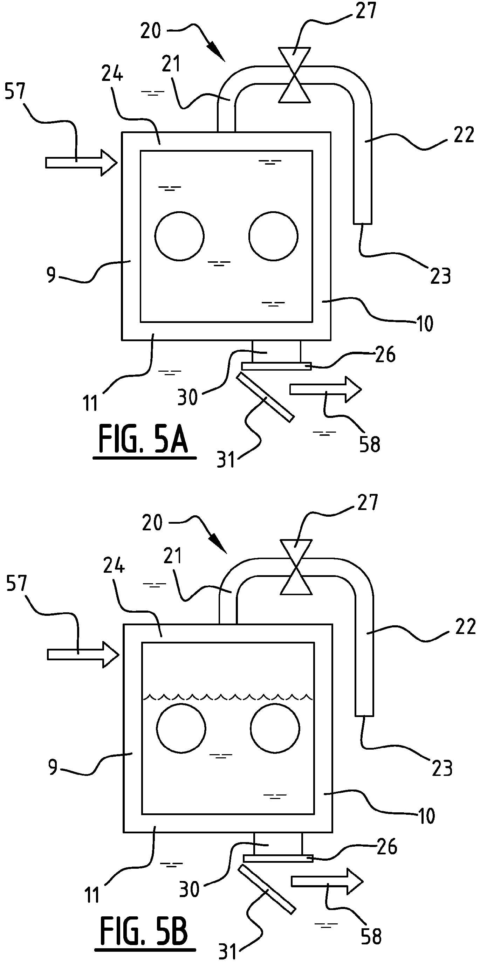

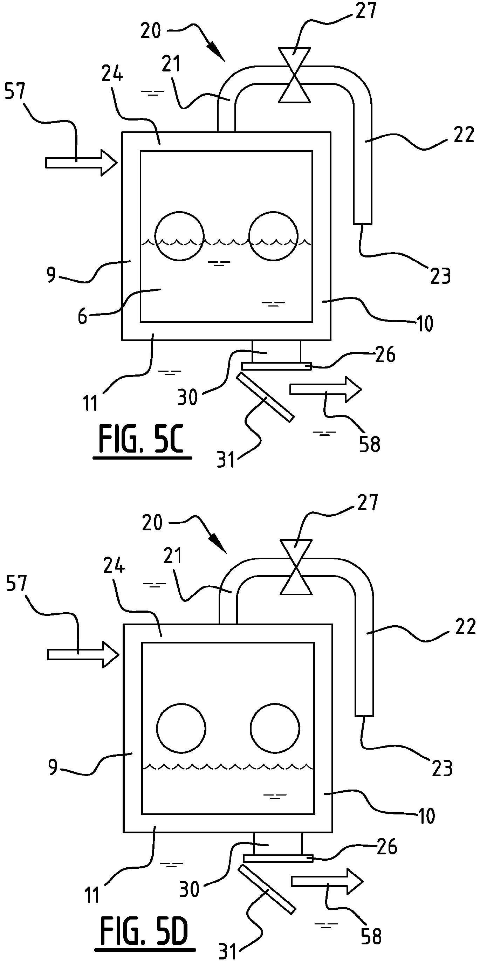

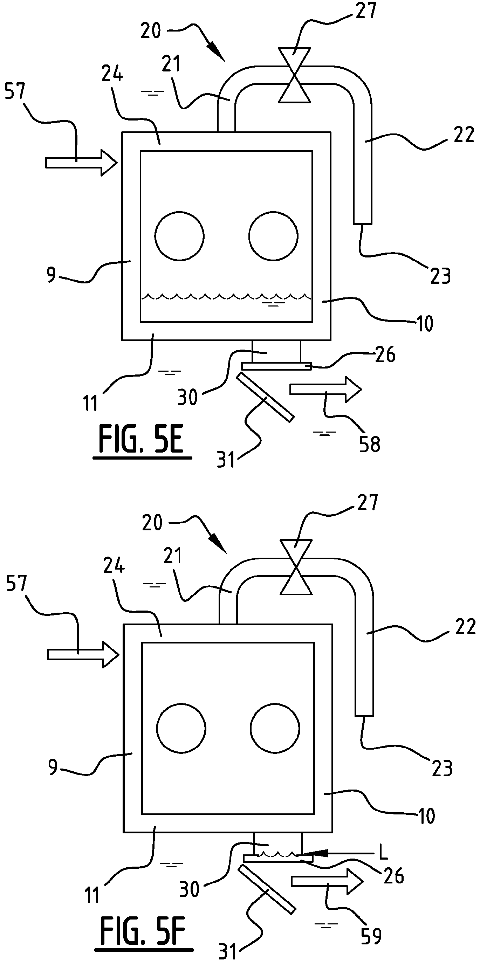

As mentioned earlier, the position of the outlet opening 29 in principle defines the height of the water level in the welding chamber when it has been fully dewatered by the gas supply and when the pressure equalization has taken place. In order to achieve the subsequent pressure equalization, the gas exhaust 20 comprises a valve 27 for opening or closing the passage through the conduit. This valve may be remotely operated, for instance by the supervisor at the water surface, and/or may be manually operated by the diver (as is shown in the figures, the valve 27 is freely accessible from outside the housing 2). In case the valve 27 is closed and no gas can escape through the gas exhaust, the supply of gas to the welding chamber will result in the size of the gas pocket to increase and the water level (height) inside the welding chamber to be reduced. The water level may be reduced by increasing the internal gas pressure inside the welding chamber until the water level reaches the opening 29 at the bottom of the welding chamber (for instance level L, figure 3). When the water level is reduced to level L, the diver may easily transfer materials like the above container 28 into the welding chamber 6. When the access lock 30 is closed and the valve 27 is opened, the internal gas pressure decreases to the same as the external water pressure at the depth of the exhaust outlet 23 while the water level inside the welding chamber 6 remains the same so that the welding chamber stays dry. More specifically, the exhaust outlet 23 is positioned between a maximum height position of the top of the housing and a minimum height position at the bottom of the housing, so that the pressure inside the welding chamber may be reduced to some extent. This is explained hereafter with reference to figures 5A5H.

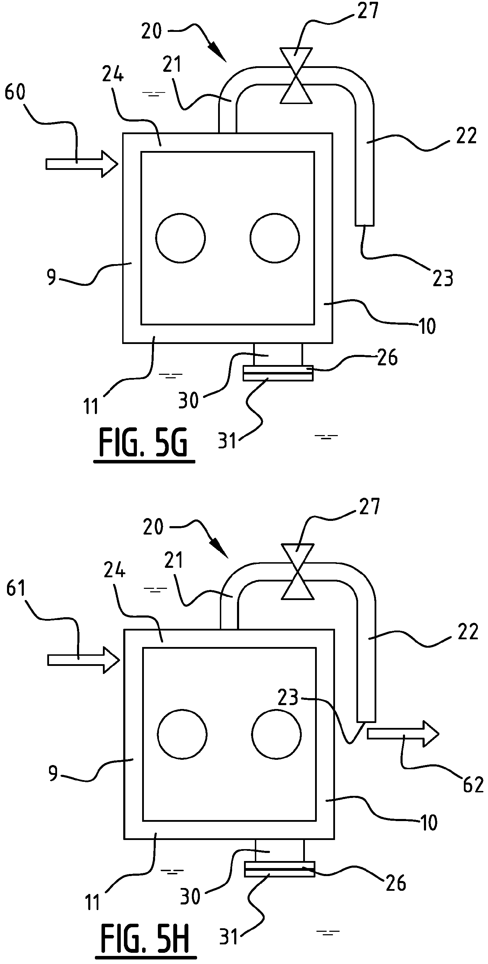

Figures 5A-5H show consecutive steps of the method of making the underwater dry-welding device 1 ready for inspection, testing and repair of the underwater structure (S) activities. The figure shows in a schematic manner the welding chamber 6, the gas exhaust 20 comprising the internal gas exhaust part 21, the external gas exhaust part 22 and the outlet opening 23, and the access or equipment lock 30 provided with the pivotable door 31. In step 100 (cf. figures 5A-5F) the method comprises supplying gas (flow 57) to the welding chamber 16 while keeping the gas exhaust 20 closed and the equipment lock 30 open. The supply of gas increases the pressure inside the welding chamber 6 since the valve 27 of the gas exhaust 20 is closed, which causes water to flow out (flow 58) of the welding chamber 6 from the opening 26 in the bottom of the chamber 6 through the equipment lock 30 to the environment. The water level inside the welding chamber 6 is gradually reduced from the maximum level shown in figure 5A, to the minimum level L shown in figure 5F. In figure 5F is shown that continuing the supply of gas (flow 57) results in an outflow of gas (gas flow 59) at the bottom of the equipment lock 30. Therefore, in step 200 the gas supply is stopped (gas stop 60, figure 5G). The pressure inside the welding chamber 6 now is the same as the water pressure at the depth of the outlet opening in the equipment lock 30.

Next, in step 300 (cf. figure 5G), the door 31 of the equipment lock 30 is closed and the gas supply is stopped (gas stop 59). The welding chamber 6 now is completely dewatered. However, inside the welding chamber the pressure is relatively high (over pressure) which may hamper the proper operation of the manipulation elements, especially in case the manipulation devices are formed by flexible gloves. The pressure inside the welding chamber 6 needs to be reduced to some extent to provide a lower pressure (i.e. an under pressure, relative to the water pressure outside the housing). To this end valve 27 in the gas exhaust 20 is opened in step 400 so that a part of the gas previously supplied to the welding chamber 6 and gas that is again supplied through the gas supply (flow 61) escapes due the prevailing over pressure from the gas exhaust 20 (flow 62, as shown in figure 5H). Since the door 31 of the equipment lock 30 is closed, the water level in the welding chamber 6 will remain the same, i.e. the level L at the bottom of the equipment lock 30.The escaping of the gas eventually leads to the above-mentioned pressure equalization, eventually resulting in a pressure inside the welding chamber 6 corresponding to the water pressure at the depth at the end of the exhaust outlet 23.

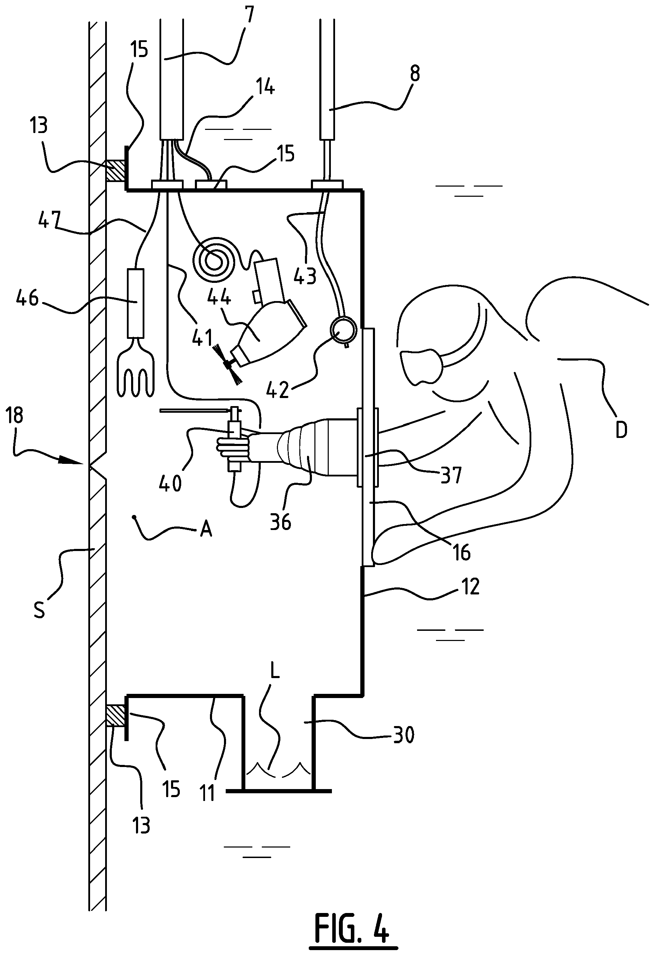

Referring to the figures, especially figures 3 and 4, the device 1 further comprises several working tools are used in the inspection, maintenance and repair process. The working tools of course comprise a welding torch 40 that is used to do the actual welding. The welding torch 40 is connected to a supply line 41 for supplying electrical power, optionally also for supplying a shielding gas (depending on the type of welding) or any material needed in the welding process. The figures also show a welding umbilical power cable 43 comprising insulated multi-core cables for both the positive and negative welding lead. The figures show a grinding unit 44 connected to electrical supply line 45 in case of an electrical grinder or a high-pressure high-flow water supply line in case the grinding unit 44 is water jet actuated. The figure also shows schematically a probe 46 connected through supply line and/or data communication line 47. The probe 47 may be used for inspection purposes, for instance for the detection of cracks or for quality control of the existing or new weld 18. More working tools may be present in the welding chamber 6, such as a magnetic earth clamp 42 to be connected directly to the underwater structure and connected via line 43 with the second umbilical part 8, a preheating unit for heating the area to be welded, for instance a resistance heating module, a brush unit for brushing the area to be welded so as to remove slag, spatter or other detrimental materials, a high-pressure water jet lance for cleaning the weld, welding inspections tool, non-destructive testing (NDT) tools, a light unit for illumination of the welding chamber, a camera connected to a control station at the water surface.

In the welding chamber 6 also working tools such as consumable or non-consumable electrodes may be stored or further materials to be used in the welding process, for instance filler metal. These working tools may be temporarily stored in a dry environment in watertight storage locks. Once the welding chamber 6 has been dewatered, these working tools and materials may be removed from the watertight locks by having the diver manually open the door of the storage lock.

In order to operate all the working tools and storage locks and to use the materials stored therein, the device comprises a number of manipulation elements 36¹,36²,36³. These manipulation elements may be configured to remotely manipulate the working tools and using the material while the diver is watching what he is doing through the transparent window 16. The manipulation elements may comprise mechanical and/or electrical actuators remotely controlled by the diver using a control (not shown in the figures) provided outside the welding chamber 6. However, in preferred embodiments of the present disclosure, the manipulation elements are formed by gloves, connected to at least one of the walls or, preferably, connected to the transparent window 16. In the latter case, the window 16 has one or more openings large enough to allow the hand of a diver to be inserted into the opening. The glove 36¹,36²,36³ is connected with a connection element 37¹,37²,37³ to the circumferential edge of the window material, around the opening. In figure 1 the situation is shown wherein each of the entrances to the gloves 36¹,36²,36³ is closed by a removable lid 39¹,39²,39³, while in figure 2 the lids have been removed so that the diver can insert his hands in each of the gloves 36¹,36²,36³.

The glove is arranged in such a way that the diver can place his hands into the glove (or in two gloves, the left hand in a first glove and the right hand in a second glove, spaced away from the first glove) and perform tasks inside the welding chamber box without breaking containment. The glove is similar to a so-called dry box glove. In embodiments of the present disclosure the glove may be of a one-piece or a multi-piece design. The required flexibility of the glove may be provided by the material it is made of and/or may be provided in another way, for instance by articulate portions of the glove. The material should allow the glove to be watertight to prevent water from entering the welding chamber. Yet the material should be sufficiently flexible to allow for an adequate feel and manual dexterity. In a further embodiment the glove comprises an outer protective flame and heat resistant material. This provides sufficient resistance to heat or sparks resulting from the welding process.

In figure 2 an embodiment of the gas-curtain unit 49 is shown in more detail. The gas-curtain unit 49 is configured to generate a gas flow 52 along the inner surface of the window 16. The gas flow 52 is generated using a high-pressure ring-shaped conduit 50 with multiple gas nozzles 51 arranged inside the welding chamber 6 along at least a part of the perimeter of the window 16. In figure 2 the nozzles 51 are arranged along the upper part of the window 16 only. The nozzles 41 are arranged to direct gas flows 52 in downward direction along the inner surface of the window 16. Generally, the gas-curtain unit 49 is aimed to prevent fogging of the window or the build-up of fumes or welding debris. Additionally, the supply of gas (for instance, air) by the gas-curtain unit 49 causes the continuous flushing of the internal atmosphere of the welding chamber 6 to create optimal operating conditions for the inspection, repair and testing process.

The preceding merely illustrates the principles of the present invention. It will be appreciated that those skilled in the art will be able to device various arrangements, which, although not explicitly described or shown herein, embody the principles of the invention and are included within the scope of the appended claims.

## Claims

1. Device (1) for underwater dry-welding of an area of an area of an underwater structure arranged in a water mass, the device comprising a housing (2) to be removably attached to the underwater structure, the housing comprising:
- a welding chamber (6), the welding chamber comprising a first side having an opening (17) arranged to face the underwater structure when the housing is attached to the underwater structure;
- a seal (13) arranged around the opening (17) in the housing configured to seal the housing relative to the underwater structure;
- at least one working tool (40, 42) to be manipulated by a diver for working on the area to be welded, the at least one working tool comprising at least a welding torch (40);
- a gas supply (7) connected to the housing and configured to supply gas to the welding chamber (6) thereof;
- a water exhaust (29) configured to allow water to be discharged from the welding chamber (6);
wherein the gas supply (7) and water exhaust (29) are configured to dewater at least a part of the welding chamber (6) so as to provide therein an essentially dry environment;
- one or more manipulation elements (36¹,36²,36³) configured to allow the diver to manipulate the at least one working tool from a position outside the housing (2);
wherein the housing (2) further comprises a second side comprising a transparent window (16) arranged to allow a diver to see both the area to be welded and the at least one working tool (40, 42) to be manipulated;
**characterized in that** the device (1) further comprises a gas exhaust (20) configured to allow gas to be discharged from the welding chamber, the gas exhaust (20) comprising a conduit (21, 22) connected to the upper part of the housing and having an inlet opening in connection with the interior of the welding chamber (6) and an outlet opening (23) at its free end, wherein the outlet opening (23) is positioned at a height position between the height position of the top (24) of the housing and the bottom (11) of the housing

2. Device (1) as claimed in claim 1, wherein the conduit extends at least partially outside the housing.

3. Device (1) as claimed in claim 1 or 2, wherein the conduit (21, 22) comprises a valve (27) for opening or closing the passage through the conduit.

4. Device (1) as claimed in any of the preceding claims, wherein the water exhaust (29) is formed by opening (26) in the housing at the bottom of the welding chamber, the opening being fitted with a lockable door (31).

5. Device as claimed in any of the preceding claims, wherein the one or more manipulation elements (36¹,36²,36³) are attached to the transparent window (16) and extending into the welding chamber (6).

6. Device as claimed in any of the preceding claims, comprising two or more manipulation elements (36¹,36²,36³) attached to the transparent window (16) at different positions next to each other.

7. Device as claimed in any of the preceding claims, wherein the manipulation element (36¹,36²,36³) is a glove configured to receive a hand of a diver, wherein the glove optionally comprises an outer protective flame and heat resistant material.

8. Device as claimed in any of the preceding claims, wherein the at least one manipulation element (36¹,36²,36³) is configured to allow a diver to make a weld on the area of the underwater structure using the welding torch placed inside the dry-environment part of the welding chamber.

9. Device as claimed in any of the preceding claims, wherein the housing (2) comprises an opening (26) in the housing at the bottom of the welding chamber, the opening being part of an equipment lock (30) configured to allow transfer of equipment and/or materials, for instance welding consumables, to the welding chamber (6).

10. Device as claimed in any of the preceding claims, comprising a gas-curtain unit (49) configured to generate a gas flow along the inner surface of the window (16) , wherein the gas-curtain (49) preferably comprises a high-pressure ring-shaped conduit with multiple gas nozzles (51) arranged inside the welding chamber along at least a part of the perimeter of the window (16).

11. Device as claimed in any of the preceding claims, wherein the one or more working tools are configured to be waterproof and/or wherein the at least one working tool further comprises at least one of a light unit for illumination of the welding chamber, a camera connected to a control station at the water surface, a magnetic earth clamp, a preheating unit for heating the area to be welded, for instance a resistance heating module and/or a resistance heating module, a grinder unit for grinding the area to be welded, a brush unit for brushing the area to be welded, a high-pressure water jet lance, weld inspections tool, non-destructive testing (NDT) tool and/or wherein the working tools comprise dry welding equipment and/or at least one of shielded metal arc welding (SMAW) equipment, gas metal arc welding (GMAW) equipment, gas tungsten arc welding (GTAW) equipment, flux-cored arc welding (FCAW) equipment and metal-cored arc welding (MCAW) equipment.

12. Device as claimed in any of the preceding claims, wherein the first side of the housing has a generally concave shape corresponding to the convex shape of the underwater structure and/or wherein the seal comprises a flat seal and a D-shaped seal, optionally also an inflatable seal between the flat seal and D-shaped seal, so as to seal the interior of the welding chamber from the water mass and/or comprising a platform coupled to the housing and configured to support the diver and/or comprising an awning attached to the housing and/or wherein the device is configured to allow welding in a water depth range of 1 to 250 meters of sea water.

13. Method of underwater dry-welding of an area of an underwater structure arranged in a water mass, the method comprising:
- attaching a device (1) to the underwater structure, wherein the device is a device as claimed in any of claims 1-3, 5-12 wherein the water exhaust (29) is formed by opening (26) in the housing at the bottom of the welding chamber, the opening being fitted with a lockable door (31);
- supplying (100) gas through to gas supply (7) to the welding chamber (6) so as to dewater at least a part of the welding chamber and to provide therein an essentially dry environment;
- welding the area of the underwater structure using the welding torch (40);
- removing the device (1) from the underwater structure, wherein the method comprises reducing the pressure inside the welding chamber after the welding chamber has been dewatered and before welding the area of the underwater structure.

14. Method as claimed in claim 13, comprising:
- supplying (100) gas through to the gas supply (7) to the welding chamber (6) with a valve (27) in the gas exhaust (20) closed and with a lockable door (31) of an opening (26) in the housing (2) open so as to increase the pressure inside the welding chamber (6) causing water to flow (58) out of the welding chamber (6) through the opening (26);
- stopping (200) the gas supply;
- closing (300) the lockable door (31);
- opening (400) the valve (27) in the gas exhaust (20) thereby allowing gas to escape due the prevailing over pressure from the gas exhaust (20) so as to reduce the pressure inside the welding chamber (6), wherein the reduced pressure corresponds to the water pressure corresponding with the depth at the end of an outlet (23) of the gas exhaust (20).

## Patentansprüche

1. Vorrichtung (1) zum Trockenschweißen unter Wasser eines Bereichs einer Unterwasserstruktur, die in einer Wassermasse angeordnet ist, die Vorrichtung umfassend ein an der Unterwasserstruktur abnehmbar anzubringendes Gehäuse (2), das Gehäuse umfassend:
- eine Schweißkammer (6), die Schweißkammer umfassend eine erste Seite, die eine Öffnung (17) aufweist, die angeordnet ist, um der Unterwasserstruktur zugewandt zu sein, wenn das Gehäuse an der Unterwasserstruktur angebracht ist;
- eine Dichtung (13), die um die Öffnung (17) herum in dem Gehäuse angeordnet ist, die konfiguriert ist, um das Gehäuse relativ zu der Unterwasserstruktur abzudichten;
- mindestens ein Arbeitswerkzeug (40, 42), um durch einen Taucher zum Bearbeiten des zu schweißenden Bereichs bedient zu werden, das mindestens eine Arbeitswerkzeug umfassend mindestens einen Schweißbrenner (40);
- eine Gaszufuhr (7), die mit dem Gehäuse verbunden ist und konfiguriert ist, um Gas zu der Schweißkammer (6) davon zuzuführen;
- einen Wasserauslass (29), der konfiguriert ist, um es Wasser zu ermöglichen, aus der Schweißkammer (6) abgelassen zu werden;
wobei die Gaszufuhr (7) und der Wasserauslass (29) konfiguriert sind, um mindestens einen Teil der Schweißkammer (6) zu entwässern, um darin eine im Wesentlichen trockene Umgebung bereitzustellen;
- ein oder mehrere Bedienungselemente (36¹, 36², 36³), die konfiguriert sind, um es dem Taucher zu ermöglichen, das mindestens eine Arbeitswerkzeug von einer Position außerhalb des Gehäuses (2) zu bedienen;
wobei das Gehäuse (2) ferner eine zweite Seite umfasst, umfassend ein transparentes Fenster (16), das angeordnet ist, um es einem Taucher zu ermöglichen, sowohl den zu schweißenden Bereich als auch das mindestens eine zu bedienende Arbeitswerkzeug (40, 42) zu sehen;
**dadurch gekennzeichnet, dass** die Vorrichtung (1) ferner einen Gasauslass (20) umfasst, der konfiguriert ist, um es Gas zu ermöglichen, aus der Schweißkammer abgelassen zu werden, der Gasauslass (20) umfassend eine Leitung (21, 22), die mit dem oberen Teil des Gehäuses verbunden ist und eine Einlassöffnung in Verbindung mit dem Inneren der Schweißkammer (6) und eine Ausflussöffnung (23) an ihrem freien Ende aufweist, wobei die Ausflussöffnung (23) in einer Höhenposition zwischen der Höhenposition der Oberseite (24) des Gehäuses und dem Boden (11) des Gehäuses positioniert ist.

2. Vorrichtung (1) nach Anspruch 1, wobei sich die Leitung mindestens teilweise außerhalb des Gehäuses erstreckt.

3. Vorrichtung (1) nach Anspruch 1 oder 2, wobei die Leitung (21, 22) ein Ventil (27) zum Öffnen oder Schließen des Durchgangs durch die Leitung umfasst.

4. Vorrichtung (1) nach einem der vorstehenden Ansprüche, wobei der Wasserauslass (29) durch eine Öffnung (26) in dem Gehäuse an dem Boden der Schweißkammer ausgebildet wird, wobei die Öffnung mit einer verriegelbaren Tür (31) versehen ist.

5. Vorrichtung nach einem der vorstehenden Ansprüche, wobei das eine oder die mehreren Bedienungselemente (36¹, 36², 36³) an dem transparenten Fenster (16) angebracht sind und sich in die Schweißkammer (6) erstrecken.

6. Vorrichtung nach einem der vorstehenden Ansprüche, umfassend zwei oder mehr Bedienungselemente (36¹, 36², 36³), die an verschiedenen Positionen nebeneinander an dem transparenten Fenster (16) angebracht sind.

7. Vorrichtung nach einem der vorstehenden Ansprüche, wobei das Bedienungselement (36¹, 36², 36³) ein Handschuh ist, der konfiguriert ist, um eine Hand eines Tauchers aufzunehmen, wobei der Handschuh optional ein äußeres schützendes flamm- und hitzebeständiges Material umfasst.

8. Vorrichtung nach einem der vorstehenden Ansprüche, wobei das mindestens eine Bedienungselement (36¹, 36², 36³) konfiguriert ist, um es einem Taucher zu ermöglichen, eine Schweißnaht an dem Bereich der Unterwasserstruktur unter Verwendung des Schweißbrenners herzustellen, der im Inneren des Trockenumgebungsteils der Schweißkammer platziert ist.

9. Vorrichtung nach einem der vorstehenden Ansprüche, wobei das Gehäuse (2) an dem Boden der Schweißkammer eine Öffnung (26) in dem Gehäuse aufweist, wobei die Öffnung Teil einer Ausrüstungsverriegelung (30) ist, die konfiguriert ist, um einen Transfer von Ausrüstung und/oder Materialien, beispielsweise Schweißverbrauchsmaterial, in die Schweißkammer (6) zu ermöglichen.

10. Vorrichtung nach einem der vorstehenden Ansprüche, umfassend eine Gasvorhangseinheit (49), die konfiguriert ist, um einen Gasstrom entlang der Innenoberfläche des Fensters (16) zu erzeugen, wobei der Gasvorhang (49) vorzugsweise eine ringförmige Hochdruckleitung mit mehreren Gasdüsen (51) umfasst, die im Inneren der Schweißkammer entlang mindestens eines Teils des Umfangs des Fensters (16) angeordnet sind.

11. Vorrichtung nach einem der vorstehenden Ansprüche, wobei das eine oder die mehreren Arbeitswerkzeuge konfiguriert sind, um wasserdicht zu sein, und/oder wobei das mindestens eine Arbeitswerkzeug ferner mindestens eines umfasst von einer Lichteinheit zum Beleuchten der Schweißkammer, einer Kamera, die mit einer Steuerstation an der Wasseroberfläche verbunden ist, einer magnetischen Erdschelle, einer Vorwärmeinheit zum Erwärmen des zu schweißenden Bereichs, beispielsweise ein Widerstandserwärmungsmodul und/oder ein Widerstandserwärmungsmodul, einer Schleifeinheit zum Schleifen des zu schweißenden Bereichs, einer Bürsteneinheit zum Bürsten des zu schweißenden Bereichs, einer Hochdruckwasserstrahllanze, einem Schweißnahtkontrollwerkzeug, einem Werkzeug für eine zerstörungsfreie Prüfung (NDT) und/oder wobei die Arbeitswerkzeuge eine Trockenschweißausrüstung und/oder mindestens eines umfassen von einer Ausrüstung für Lichtbogenhandschweißen (SMAW), einer Ausrüstung für Schutzgasschweißen (GMAW), einer Ausrüstung für Wolfram-Inertgasschweißen (GTAW), Ausrüstung für Fülldrahtschweißen (FCAW) und einer Ausrüstung für Metallpulverfülldrahtschweißen (MCAW).

12. Vorrichtung nach einem der vorstehenden Ansprüche, wobei die erste Seite des Gehäuses eine im Allgemeinen konkave Form aufweist, die der konvexen Form der Unterwasserstruktur entspricht, und/oder wobei die Dichtung eine Flachdichtung und eine D-förmige Dichtung umfasst, optional auch eine aufblasbare Dichtung zwischen der Flachdichtung und der D-förmigen Dichtung, um das Innere der Schweißkammer gegenüber der Wassermasse abzudichten, und/oder umfassend eine Plattform, die mit dem Gehäuse verbunden ist und konfiguriert ist, um den Taucher zu tragen, und/oder umfassend ein Vordach, das an dem Gehäuse angebracht ist, und/oder wobei die Vorrichtung konfiguriert es, um das Schweißen in einem Wassertiefenbereich von 1 bis 250 Metern Meerwasser zu ermöglichen.

13. Verfahren zum Trockenschweißen unter Wasser eines Bereichs einer Unterwasserstruktur, die in einer Wassermasse angeordnet ist, das Verfahren umfassend:
- Anbringen einer Vorrichtung (1) an der Unterwasserstruktur, wobei die Vorrichtung eine Vorrichtung nach einem der Ansprüche 1 bis 3, 5 bis 12 ist, wobei der Wasserauslass (29) durch eine Öffnung (26) in dem Gehäuse an dem Boden der Schweißkammer ausgebildet wird, wobei die Öffnung mit einer verriegelbaren Tür (31) versehen ist;
- Zuführen (100) von Gas durch die Gaszufuhr (7) zu der Schweißkammer (6), um mindestens einen Teil der Schweißkammer zu entwässern und darin eine im Wesentlichen trockene Umgebung bereitzustellen;
- Verschweißen des Bereichs der Unterwasserstruktur unter Verwendung des Schweißbrenners (40);
- Abnehmen der Vorrichtung (1) von der Unterwasserstruktur, wobei das Verfahren ein Reduzieren des Drucks im Inneren der Schweißkammer umfasst, nachdem die Schweißkammer entwässert wurde und vor dem Schweißen des Bereichs der Unterwasserstruktur.

14. Verfahren nach Anspruch 13, umfassend:
- Zuführen (100) von Gas durch die Gaszufuhr (7) zu der Schweißkammer (6), wobei ein Ventil (27) in dem Gasauslass (20) geschlossen ist und wobei eine verriegelbare Tür (31) einer Öffnung (26) in dem Gehäuse (2) geöffnet ist, um den Druck im Inneren der Schweißkammer (6) zu erhöhen, wobei Wasser veranlasst wird, durch die Öffnung (26) aus der Schweißkammer (6) herauszuströmen (58);
- Stoppen (200) der Gaszufuhr;
- Schließen (300) der verriegelbaren Tür (31);
- Öffnen (400) des Ventils (27) in dem Gasauslass (20), wodurch es Gas ermöglicht wird, aufgrund des vorherrschenden Überdrucks aus dem Gasauslass (20) zu entweichen, um den Druck im Inneren der Schweißkammer (6) zu reduzieren, wobei der reduzierte Druck dem Wasserdruck entspricht, der der Tiefe an dem Ende eines Ausflusses (23) des Gasauslasses (20) entspricht.

## Revendications

1. Dispositif (1) de soudage à sec sous-marine d'une zone d'une structure sous-marine disposée dans une masse d'eau, le dispositif comprenant un boîtier (2) à être fixé de manière amovible à la structure sous-marine, le boîtier comprenant :
- une chambre de soudage (6), la chambre de soudage comprenant un premier côté ayant une ouverture (17) disposée de sorte à faire face à la structure sous-marine lorsque le boîtier est fixé à la structure sous-marine ;
- un joint d'étanchéité (13) disposé autour de l'ouverture (17) dans le boîtier conçu pour sceller le boîtier par rapport à la structure sous-marine ;
- au moins un outil de travail (40, 42) à être manipulé par un plongeur afin de travailler sur la zone à souder, l'au moins un outil de travail comprenant au moins un chalumeau soudeur (40) ;
- une alimentation en gaz (7) reliée au boîtier et conçue pour fournir du gaz à la chambre de soudage (6) de celui-ci ;
- une évacuation d'eau (29) conçue pour permettre à l'eau d'être déchargée de la chambre de soudage (6) ;
dans lequel l'alimentation en gaz (7) et l'évacuation d'eau (29) sont conçues pour assécher au moins une partie de la chambre de soudage (6) de manière à fournir un environnement essentiellement sec dans celle-ci ;
- un ou plusieurs éléments de manipulation (36¹, 36², 36³) conçus pour permettre au plongeur de manipuler l'au moins un outil de travail à partir d'une position à l'extérieur du boîtier (2) ;
dans lequel le boîtier (2) comprend en outre un second côté comprenant une fenêtre transparente (16) disposée de sorte à permettre à un plongeur de voir à la fois la zone à souder et l'au moins un outil de travail (40, 42) à manipuler ;
**caractérisé en ce que** le dispositif (1) comprend en outre un échappement de gaz (20) conçu pour permettre au gaz d'être déchargé de la chambre de soudage, l'échappement de gaz (20) comprenant une conduite (21, 22) reliée à la partie supérieure du boîtier et ayant une ouverture d'entrée en liaison avec l'intérieur de la chambre de soudage (6) et une ouverture de sortie (23) au niveau de son extrémité libre, dans lequel l'ouverture de sortie (23) est positionnée au niveau d'une position de hauteur entre la position de hauteur du haut (24) du boîtier et le bas (11) du boîtier.

2. Dispositif (1) selon la revendication 1, dans lequel la conduite s'étend au moins partiellement à l'extérieur du boîtier.

3. Dispositif (1) selon la revendication 1 ou 2, dans lequel la conduite (21, 22) comprend une valve (27) destiné à ouvrir ou à fermer le passage à travers la conduite.

4. Dispositif (1) selon l'une quelconque des revendications précédentes, dans lequel l'évacuation d'eau (29) est formée par une ouverture (26) dans le boîtier au fond de la chambre de soudage, l'ouverture étant munie d'une porte verrouillable (31).

5. Dispositif selon l'une quelconque des revendications précédentes, dans lequel le ou les éléments de manipulation (36¹, 36², 36³) sont fixés à la fenêtre transparente (16) et s'étendent dans la chambre de soudage (6).

6. Dispositif selon l'une quelconque des revendications précédentes, comprenant deux éléments de manipulation (36¹, 36², 36³) ou plus fixés à la fenêtre transparente (16) au niveau de différentes positions les uns à côté des autres.

7. Dispositif selon l'une quelconque des revendications précédentes, dans lequel l'élément de manipulation (36¹, 36², 36³) est un gant conçu pour recevoir une main d'un plongeur, dans lequel le gant comprend éventuellement un matériau extérieur de protection résistant aux flammes et à la chaleur.

8. Dispositif selon l'une quelconque des revendications précédentes, dans lequel l'au moins un élément de manipulation (36¹, 36², 36³) est conçu pour permettre à un plongeur de réaliser une soudure sur la zone de la structure sous-marine à l'aide du chalumeau soudeur mis à l'intérieur de la partie d'environnement sec de la chambre de soudage.

9. Dispositif selon l'une quelconque des revendications précédentes, dans lequel le boîtier (2) comprend une ouverture (26) dans le boîtier au fond de la chambre de soudage, l'ouverture faisant partie d'un sas du matériel (30) conçu pour permettre le transfert de matériel et/ou de matériaux, par exemple de consommables de soudage, vers la chambre de soudage (6).

10. Dispositif selon l'une quelconque des revendications précédentes, comprenant une unité de rideau de gaz (49) conçue pour générer un flux de gaz le long de la surface intérieure de la fenêtre (16), dans lequel le rideau de gaz (49) comprend de préférence une conduite en forme d'anneau à haute pression avec plusieurs buses de gaz (51) disposées à l'intérieur de la chambre de soudage le long d'au moins une partie du périmètre de la fenêtre (16).

11. Dispositif selon l'une quelconque des revendications précédentes, dans lequel le ou les outils de travail sont conçus pour être étanches et/ou dans lequel l'au moins un outil de travail comprend en outre au moins l'un parmi une unité d'éclairage pour l'illumination de la chambre de soudage, une caméra connectée à une station de commande au niveau de la surface de l'eau, une prise de masse magnétique, une unité de préchauffage destinée à chauffer la zone à souder, par exemple un module de chauffage par résistance, un module de chauffage par résistance et/ou une unité de meulage destinée à meuler la zone à souder, une unité de brossage destinée à brosser la zone à souder, une lance à jet d'eau à haute pression, un outil d'inspection de soudure, un outil d'essai non destructif (NDT) et/ou dans lequel les outils de travail comprennent un équipement de soudage à sec et/ou au moins l'un parmi un équipement de soudage à l'arc avec électrode enrobée (SMAW), un équipement de soudage à l'arc sous gaz avec fil plein (GMAW), un équipement de soudage à l'arc sous gaz inerte avec électrode de tungstène (GTAW), un équipement de soudage à l'arc avec fil fourré (FCAW) et un équipement de soudage à l'arc avec fil à âme métallique (MCAW).

12. Dispositif selon l'une quelconque des revendications précédentes, dans lequel le premier côté du boîtier a une forme généralement concave correspondant à la forme convexe de la structure sous-marine et/ou dans lequel le joint d'étanchéité comprend un joint d'étanchéité plat et un joint d'étanchéité en forme de D, éventuellement aussi un joint d'étanchéité gonflable entre le joint d'étanchéité plat et le joint d'étanchéité en forme de D, de manière à sceller l'intérieur de la chambre de soudage par rapport à la masse d'eau et/ou comprenant une plate-forme accouplée au boîtier et conçue pour soutenir le plongeur et/ou comprenant un auvent fixé au boîtier et/ou dans lequel le dispositif est conçu pour permettre un soudage dans l'eau de mer comprise dans une plage de profondeur d'eau allant de 1 à 250 mètres.

13. Procédé de soudage à sec sous-marine d'une zone d'une structure sous-marine disposée dans une masse d'eau, le procédé comprenant :
- la fixation d'un dispositif (1) à la structure sous-marine, dans lequel le dispositif est un dispositif selon l'une quelconque des revendications 1 à 3, 5 à 12, dans lequel l'évacuation d'eau (29) est formée par une ouverture (26) dans le boîtier au fond de la chambre de soudage, l'ouverture étant munie d'une porte verrouillable (31) ;
- la fourniture (100) du gaz par l'intermédiaire d'une alimentation en gaz (7) vers la chambre de soudage (6) de manière à assécher au moins une partie de la chambre de soudage et à fournir un environnement essentiellement sec dans celle-ci ;
- le soudage de la zone de la structure sous-marine à l'aide du chalumeau soudeur (40) ;
- le retrait du dispositif (1) de la structure sous-marine, dans lequel le procédé comprend la réduction de la pression à l'intérieur de la chambre de soudage après que la chambre de soudage a été asséchée et avant le soudage de la zone de la structure sous-marine.

14. Procédé selon la revendication 13, comprenant :
- la fourniture (100) du gaz par l'intermédiaire de l'alimentation en gaz (7) vers la chambre de soudage (6) avec une valve (27) dans l'échappement de gaz (20) fermée et avec une porte verrouillable (31) d'une ouverture (26) dans le boîtier (2) ouverte de manière à augmenter la pression à l'intérieur de la chambre de soudage (6), amenant l'eau à s'écouler (58) hors de la chambre de soudage (6) par l'intermédiaire de l'ouverture (26) ;
- l'arrêt (200) de l'alimentation en gaz ;
- la fermeture (300) de la porte verrouillable (31) ;
- l'ouverture (400) de la valve (27) dans l'échappement de gaz (20), permettant ainsi au gaz de s'échapper, en raison de la surpression dominante, de l'échappement de gaz (20), de manière à réduire la pression à l'intérieur de la chambre de soudage (6), dans lequel la pression réduite correspond à la pression de l'eau correspondant à la profondeur au niveau de l'extrémité d'une sortie (23) de l'échappement de gaz (20).
